(19) **Europäisches Patentamt / European Patent Office / Office européen des brevets**

(11) **EP 1 839 303 B1**

(12) **EUROPEAN PATENT SPECIFICATION**

(45) Date of publication and mention
of the grant of the patent:
**22.10.2008 Bulletin 2008/43**

(51) Int Cl.:
**G11B 7/135** (2006.01) **G02B 5/18** (2006.01)

(21) Application number: **06710632.8**

(22) Date of filing: **06.01.2006**

(86) International application number:
**PCT/IB2006/050057**

(87) International publication number:
**WO 2006/075271 (20.07.2006 Gazette 2006/29)**

(54) **OPTICAL SCANNING DEVICE**

OPTISCHE ABTASTVORRICHTUNG

DISPOSITIF DE BALAYAGE OPTIQUE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **11.01.2005 EP 05100106**

(43) Date of publication of application:
**03.10.2007 Bulletin 2007/40**

(73) Proprietor: **Koninklijke Philips Electronics N.V.
5621 BA Eindhoven (NL)**

(72) Inventors:
• **STALLINGA, Sjoerd
NL-5656 AA Eindhoven (NL)**

• **TUKKER, Teunis, W.
NL-5656 AA Eindhoven (NL)**

(74) Representative: **Uittenbogaard, Frank
Philips
Intellectual Property & Standards
P.O. Box 220
5600 AE Eindhoven (NL)**

(56) References cited:
**EP-A- 1 394 573          EP-A- 1 500 956
WO-A-03/060892          US-A1- 2003 169 498**

Printed by Jouve, 75001 PARIS (FR)

**Description**

The present invention relates to an optical scanning device for scanning different optical record carriers, in particular, but not exclusively, for scanning optical record carriers having different information layer depths.

The field of data storage using optical record carriers is currently an intensively researched area of technology. There are many such optical record carrier formats including compact discs (CD), conventional digital versatile discs (DVD) and Bluray™ discs (BD). These formats are available in different types including read-only versions (CD-ROM/ DVD-ROM/ BD-ROM), recordable versions (CD-R/ DVD-R/ BD-R), rewritable versions (CD-RW/ DVD-RW/ BD-RE) and audio versions (CD-A). For scanning the different formats of optical record carriers, it is necessary to use a radiation beam having a different wavelength. This wavelength is approximately 790 nm for scanning a CD, approximately 660 nm for scanning a DVD and approximately 405 nm for scanning a BD.

Different optical disc formats are capable of storing different maximum quantities of data. This maximum quantity is related to the wavelength of the radiation beam, which is necessary to scan the disc, and a numerical aperture (NA) of the objective lens. Scanning may include reading and/or writing of data on the disc.

The data on an optical disc is stored on an information layer. The information layer of the disc is protected by a cover layer which has a predetermined thickness. Different optical disc formats may have a different thickness of the cover layer, for example, the cover layer thickness of a CD is approximately 1.2 mm, a DVD approximately 0.6 mm and a BD approximately 0.1 mm. When scanning an optical disc of a certain format, the radiation beam is focused on a point on the information layer. As the radiation beam passes through the cover layer of the disc, a spherical aberration is introduced into the radiation beam. An amount of introduced spherical aberration depends on the thickness of the cover layer, the wavelength of the radiation beam, and the numerical aperture of the objective lens. Prior to reaching the cover layer of the disc, the radiation beam needs to already have a certain spherical aberration, such that, in combination with the spherical aberration introduced by the cover layer, the radiation beam may be correctly focused on the information layer of the disc. For scanning different discs with different cover layer thicknesses, the radiation beam needs to have a different spherical aberration prior to reaching the cover layer. This ensures correct focusing of the radiation beam on the information layer.

It is desirable to have one optical device which is capable of scanning many different disc formats, for example, CD, DVD and BD. Such devices are often relatively difficult to design, partly because different cover layer thicknesses require a different spherical aberration of the appropriate radiation beam prior to reaching the cover layer.

Additionally, it is often desirable to maximize an accuracy of scanning one disc format by minimizing any phase errors introduced into the spherical aberration of the radiation beam by the scanning device. However, maximizing the accuracy for one disc format often causes additional phase errors to be introduced into the radiation beams scanning the other disc formats, thus reducing the scanning accuracy of these formats.

European patent application EP 1 500 956 discloses an optical scanning device for scanning different optical disc formats, for example, CD, DVD and a high-density optical disc having an information layer depth of 0.1 mm, using radiation beams with different wavelengths. The scanning device comprises a dichroic holographic element which has at least one surface with a repeating pattern of a group of grooves having different depths. In one embodiment, the group has five grooves, each of a different depth. The dichroic holographic element diffracts the radiation beam for scanning the DVD and the CD, but the radiation beam for scanning the high-density disc passes unaffected through the holographic element.

It is an object of the present invention to provide an optical scanning device for scanning different optical record carriers at a high level of accuracy.

According to the present invention, an optical scanning device is provided for scanning a first optical record carrier, a second, different, optical record carrier and a third, different, optical record carrier, each record carrier having an information layer, wherein the scanning device includes:

a) a radiation source system arranged to produce first, second and third radiation beams for scanning said first, second and third record carriers with first, second and third wavelengths, respectively; and

b) a diffraction structure arranged to introduce a first, second and third wavefront modification into the first, second and third radiation beams, respectively, wherein the diffraction structure includes a surface having a plurality of steps, each step having a step height which controls a form of the first, second and third wavefront modifications, and is characterized in that the diffraction structure is formed from a material having an Abbe number of less than 50, whereby dispersion is provided between said first, second and third wavelengths, wherein in combination with the control provided by the step heights said dispersion is arranged to provide further control of the form of said first, second and third wavefront modifications so that a desired amount of spherical aberration is introduced into said first, second and third radiation beams appropriate to the information layer depths of said first, second and third optical record carriers, respectively.

Use of a material with an Abbe number of less than 50 provides a degree of control over the form of each wavefront modification. This control allows the introduction of each wavefront modification to be performed in a highly efficient manner, and, in combination with the control provided by the step heights of the diffraction structure, a desired amount of spherical aberration may be introduced into each radiation beam so that each optical record carrier may be scanned at a high level of accuracy.

In a preferred embodiment, said diffraction structure is arranged to diffract each first, second and third radiation beam in accordance with a selected diffraction order.

Diffraction of each radiation beam contributes to the form of each wavefront modification so that a desired amount of spherical aberration may be introduced into each radiation beam.

Furthermore, the information layers of the first, second and third optical record carriers preferably lie at a first information layer depth, a second, different, information layer depth and a third, different, information layer depth, respectively.

The control of the form of the wavefront modifications that is provided by both the dispersion and the step heights allows different formats of optical record carriers to be scanned. As the information layer of each format may lie at a different depth within the carrier, an appropriate amount of introduced spherical aberration may be controlled so as to provide accurate scanning of the carriers.

Further features and advantages of the invention are apparent from the following description of preferred embodiments of the invention, given by way of example only, with reference to the accompanying drawings.

Figure 1 shows schematically an optical scanning device in accordance with an embodiment of the present invention.

Figure 2 shows schematically an optical system in accordance with an embodiment of the present invention.

Figure 3 shows schematically a diffraction structure in accordance with an embodiment of the present invention.

Figures 4, 6, 8 and 10 show graphically a relationship between a phase error and an Abbe number in accordance with embodiments of the present invention.

Figures 5, 7, 9 and 11 show graphically a relationship between a diffraction efficiency for different radiation beams and an Abbe number in accordance with embodiments of the present invention.

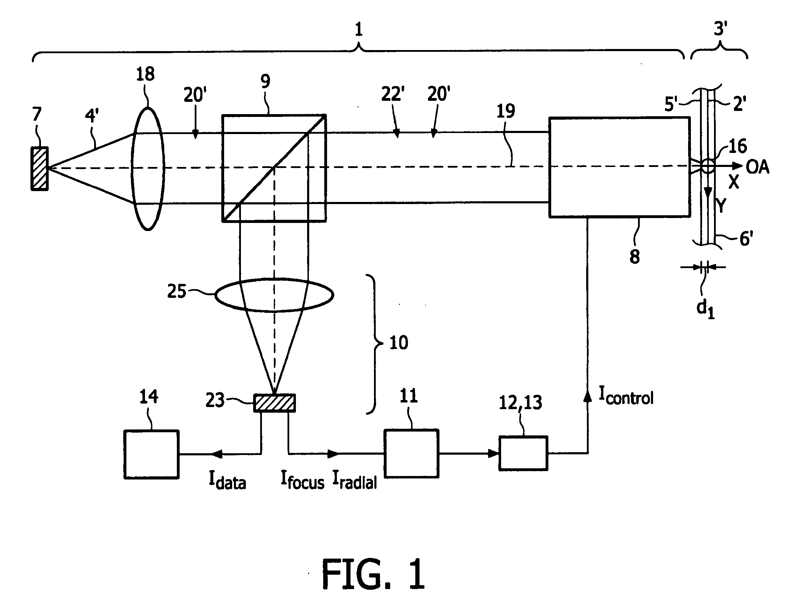

Figure 1 shows schematically an optical scanning device 1 for scanning a first, second and third optical record carrier with a first, second and third, different, radiation beam, respectively. The first optical record carrier 3' is illustrated and has a first information layer 2' which is scanned by means of the first radiation beam 4'. The first optical record carrier 3' includes a cover layer 5' on one side of which the first information layer 2' is arranged. The side of the information layer facing away from the cover layer 5' is protected from environmental influences by a protective layer 6'. The cover layer 5' acts as a substrate for the first optical record carrier 3' by providing mechanical support for the first information layer 2'. Alternatively, the cover layer 5' may have the sole function of protecting the first information layer 2', while the mechanical support is provided by a layer on the other side of the first information layer 2', for instance, by the protective layer 6' or by an additional information layer and cover layer connected to the uppermost information layer. The first information layer 2' has a first information layer depth $d_1$ that corresponds to the thickness of the cover layer 5'. The second and third optical record carriers have a second and a third, different, information layer depth $d_2$, $d_3$, respectively, corresponding to the thickness of the cover layer of the second and third optical record carriers 3, respectively. The third information layer depth $d_3$ is smaller than the second information layer depth $d_2$ which is smaller than the first information layer depth $d_1$, i.e. $d3<d2<d1$. The first information layer 2' is a surface of the first optical record carrier 3'. Similarly, the second and third information layers are surfaces of the second and third optical record carriers. This surface contains at least one track, i.e. a path to be followed by the spot of a focused radiation, on which path optically readable marks are arranged to represent information. The marks may be, e.g., in the form of pits or areas with a reflection coefficient or a direction of magnetization different from the surroundings. In the case where the first optical record carrier 3' has the shape of a disc, the following is defined with respect to a given track: the "radial direction" is the direction of a reference axis, the X-axis, between the track and the center of the disc, and the "tangential direction" is the direction of another axis, the Y-axis, which is tangential to the track and perpendicular to the X-axis. In this embodiment, the first optical record carrier 3' is a compact disc (CD) and the first information layer depth $d_1$ is approximately 1.2 mm, the second optical record carrier 3 is a conventional digital versatile disc (DVD) and the second information layer depth $d_2$ is approximately 0.6 mm, and the third optical record carrier is a Blu-ray™ disc (BD) and the third information layer depth $d_3$ is approximately 0.1 mm.

As is shown in Figure 1, the optical scanning device 1 has an optical axis OA and includes a radiation source system 7, a collimator lens 18, a beam splitter 9, an optical system 8 and a detection system 10. Furthermore, the optical scanning device 1 includes a servo circuit 11, a focus actuator 12, a radial actuator 13, and an information-processing unit 14 for error correction.

The radiation source system 7 is arranged to consecutively or simultaneously produce the first radiation beam 4', the second radiation beam and/or the third, different, radiation beam (not shown in Figure 1). For example, the radiation source 7 may comprise either a tunable semiconductor laser for consecutively supplying the radiation beams 4' or three semiconductor lasers for simultaneously or consecutively supplying these radiation beams. The first radiation beam 4' has a first predetermined wavelength $\lambda_C$, the second radiation beam has a second, different, predetermined wavelength $\lambda_D$, and the third radiation beam has a third, different, predetermined wavelength $\lambda_B$. In this embodiment, the third wavelength $\lambda_B$ is shorter than the second wavelength $\lambda_D$ and the second wavelength $\lambda_D$ is shorter than the first wavelength $\lambda_C$. In this embodiment, the first, second and third wavelengths $\lambda_C, \lambda_D, \lambda_B$ are within the range of approximately 770 to 810 nm for $\lambda_C$, 640 to 680nm for $\lambda_D$, and 400 to 420nm for $\lambda_B$ and are preferably approximately 790 nm, 660 nm and 405 nm, respectively. The first, second and third radiation beams have a numerical aperture (NA) of approximately 0.5, 0.65 and 0.85, respectively.

The collimator lens 18 is arranged on the optical axis OA for transforming the first radiation beam 4' into a first substantially collimated beam 20'. Similarly, it transforms the second and third radiation beams into a second, substantially collimated beam and a third, substantially collimated beam (not illustrated in Figure 1).

The beam splitter 9 is arranged to transmit the first, second and third collimated radiation beams 20' to the optical system 8. The beam splitter 9 is preferably a cubic beam splitter.

The optical system 8 is arranged to focus the first, second and third collimated radiation beams 20' onto a desired focal point in the first, second and third optical record carriers 3', respectively. The desired focal point for the first, second and third radiation beams 20' is a first 16', second and third scanning spot, respectively. Each scanning spot corresponds to a position on the information layer 2' of the appropriate optical record carrier. Each scanning spot is preferably substantially diffraction-limited and has a wavefront aberration of less than 72m$\lambda$.

During scanning, the first optical record carrier 3' rotates on a spindle (not illustrated in Figure 1) and the first information layer 2' is then scanned through the cover layer 5'. The focused first radiation beam 20' reflects on the first information layer 2', thereby forming a reflected first radiation beam which returns on the optical path of the forward-converging focused first radiation beam provided by the optical system 8. The optical system 8 transforms the reflected first radiation beam to a reflected collimated first radiation beam 22'. The beam splitter 9 separates the forward first radiation beam 20' from the reflected first radiation beam 22' by transmitting at least a part of the reflected first radiation beam 22' towards the detection system 10.

The detection system 10 includes a convergent lens 25 and a quadrant detector 23 which are arranged to capture said part of the reflected first radiation beam 22' and to convert it to one or more electric signals. One of the signals is an information signal $I_{data}$, the value of which represents the information scanned on the information layer 2'. The information signal $I_{data}$ is processed by the information-processing unit 14 for error correction. Other signals from the detection system 10 are a focus error signal $I_{focus}$ and a radial tracking error signal $I_{radial}$. The signal $I_{focus}$ represents the axial difference in height along the optical axis OA between the first scanning spot 16' and the position of the first information layer 2'. This signal is preferably formed by the "astigmatic method" which is known from, inter alia, the book by G. Bouwhuis, J. Braat, A. Huijser et al, entitled "Principles of Optical Disc Systems," pp.75-80 (Adam Hilger 1985) (ISBN 0-85274-785-3). A device for creating astigmatism in accordance with this focusing method is not illustrated. The radial tracking error signal $I_{radial}$ represents the distance in the XY-plane of the first information layer 2' between the first scanning spot 16' and the centre of a track in the information layer 2' to be followed by the first scanning spot 16'. This signal is preferably formed by means of the "radial push-pull method" which is known from, inter alia, the book by G. Bouwhuis, pp.70-73.

The servo circuit 11 is arranged to provide servo control signals $I_{control}$ in response to the signals $I_{focus}$ and $I_{radial}$ for controlling the focus actuator 12 and the radial actuator 13, respectively. The focus actuator 12 controls the position of a lens of the optical system 8 along the optical axis OA, thereby controlling the position of the first scanning spot 16' so that it coincides substantially with the plane of the first information layer 2'. The radial actuator 13 controls the position of the lens of the optical system 8 along the X-axis, thereby controlling the radial position of the first scanning spot 16' so that it coincides substantially with the center line of the track to be followed in the first information layer 2'.

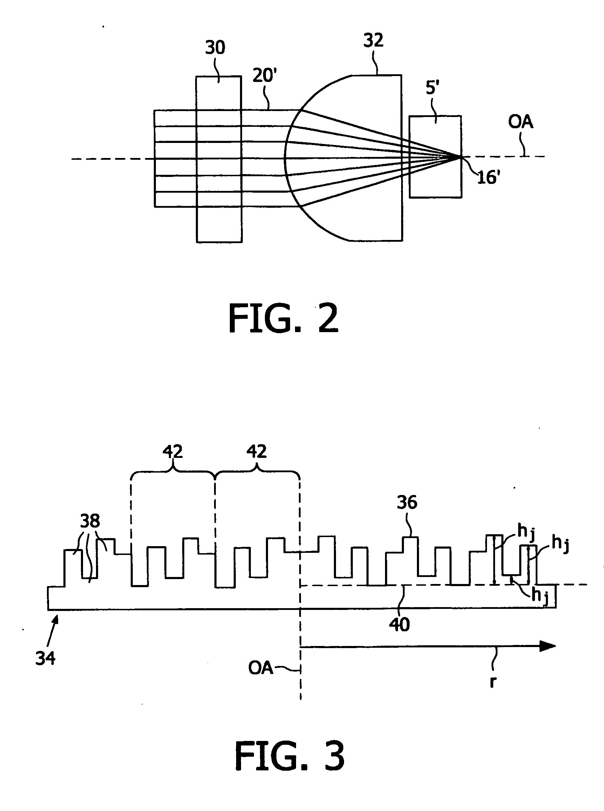

Figure 2 shows schematically the optical system 8 of the optical scanning device 1. In accordance with an embodiment of the present invention, the optical system 8 is arranged to introduce a first, a second and a third, different, amount of spherical aberration into the first, second and third radiation beams, respectively. For each radiation beam, the introduced amount of spherical aberration is cancelled by an amount of spherical aberration introduced by the cover layer of the carrier being scanned. In this way, each radiation beam may be focused accurately onto the scanning spot on the information layer of the appropriate record carrier.

The optical system 8 includes a compatibility plate 30 and a lens 32 which are both arranged on the optical axis OA. The lens 32 is an objective lens and has an aspherical face facing away from the optical record carrier. The lens 32 may be formed of glass. The lens 32, when operating without the compatibility plate 30, is arranged to focus a collimated radiation beam having approximately the third wavelength $\lambda_B$ and a numerical aperture (NA) of approximately 0.85 through a cover layer having the third information layer depth $d_3$ of approximately 0.1 mm onto the third scanning spot.

The compatibility plate 30 has a first NA, a second, different, NA and a third, different, NA. The first, second and third NA are approximately 0.5, 0.65 and 0.85, respectively, and correspond to the NA of the first 4', second and third radiation beams. Within a region of the compatibility plate 30, which corresponds to the NA of 0.5, the plate 30 includes a diffraction structure 34, which is shown schematically in a cross-section, and not to scale, in Figure 3. The optical axis OA passes through a center of the diffraction structure 34.

The diffraction structure 34 has a surface 36 having a plurality of steps 3 8. The diffraction structure 34 introduces a first, a second and a third wavefront modification $WM_1$, $WM_2$, $WM_3$ into the first, second and third radiation beam, respectively. Each step 38 has a step height $h_j$, taken from a phase reference plane 40 and in a direction parallel to the optical axis OA, which controls a form of each wavefront modification $WM_1$, $WM_2$, $WM_3$. The integer $j$ is defined below. Each step 38 has a uniform width, taken along a radius r extending from the optical axis OA.

Each step 38 is annular and is centered about the optical axis OA. The steps 38 are arranged in sets 42, each set 42 having the same number N of steps 38 which are arranged adjacently and in accordance with a sequence of step heights $h_j$, which is the same for each set 42. Each step 38 of the sequence is labelled, for the purposes of the description given herein, using the integer $j$ wherein, for example, $j$=1, 2...$N$-1. In each set 42, there is a step 38 wherein $j$=$N$ and the step height is $h_N$= 0. This $j$=$N$ step defines the position of the phase reference plane 40 in the structure 34. A further description of the step heights $h_j$ is given below. The sets 42 are arranged to repeat periodically across the surface 36, in this embodiment along the radius r.

The diffraction structure 34 is formed from a material having an Abbe number $V$ of less than 50. The Abbe number V indicates a dispersion of the material for radiation of different wavelengths. A relatively high Abbe number indicates a relatively low dispersion and a relatively low Abbe number indicates a relatively high dispersion. The dispersion of the structure 34 further controls the form of the first, second and third wavefront modifications $WM_1$, $WM_2$, $WM_3$.

Dispersion is conventionally characterized by the Abbe number V in accordance with relation 1:

$$V = \frac{n_1 - 1}{n_2 - n_3} \qquad (1)$$

wherein $n_1$, $n_2$, and $n_3$ are taken as the refractive indices for radiation beams having a wavelength $\lambda$ of 0.5876 $\mu$m, 0.4861 $\mu$m, and 0.6563 $\mu$m, respectively.

A design of the diffraction structure 34 is based on the assumption that the refractive index n varies with the wavelength $\lambda$ of the radiation, in accordance with relation 2, which is "Cauchy's formula":

$$n = a + \frac{b}{\lambda^2} \qquad (2)$$

wherein a and b are constants.

A refractive index for the first radiation beam (CD) and the third radiation beam (BD) $n_G$, $n_B$ can be expressed in accordance with relations 3 and 4, respectively:

$$n_C = 1 + \frac{n_D - 1}{\kappa + 1}\left(\kappa + \frac{\lambda_D{}^2}{\lambda_C{}^2}\right)$$

$$n_B = 1 + \frac{n_D - 1}{\kappa + 1}\left(\kappa + \frac{\lambda_D{}^2}{\lambda_B{}^2}\right) \qquad (3), (4)$$

wherein $n_D$ is the refractive index for the second radiation beam (DVD) and $\kappa$ is a dispersion parameter which is defined in terms of the Abbe number $V$ in accordance with relation 5:

$$\kappa = V\left[\frac{\lambda_D{}^2}{\lambda_2{}^2} - \frac{\lambda_D{}^2}{\lambda_3{}^2}\right] - \frac{\lambda_D{}^2}{\lambda_1{}^2} \qquad (5)$$

The diffraction structure 34 diffracts each radiation beam in accordance with a selected diffraction order and with a diffraction efficiency of more than 50%, more preferably more than 70% and most preferably more than 80%. Each step 38 introduces an amount of phase delay, modulo $2\pi$, into the first, second and third radiation beams. The different step heights $h_j$ determine the amount of phase delay. The step heights $h_j$ of the steps are arranged to introduce at least one diffraction order, into at least one of the radiation beams, which approximates a diffraction order which would be introduced by a "blazed" type of diffraction grating. In this embodiment, the first, second and third radiation beams are diffracted into the +1,0 and -1 orders, respectively.

Phases $\Phi_C$, $\Phi_D$, $\Phi_B$, introduced into the first, second and third radiation beams by the diffraction structure 34 are defined in accordance with relations 6, 7 and 8:

$$\Phi_{C,j} = 2\pi \frac{n_C - 1}{\lambda_C} h_j = 2\pi \left[ k_{C,j} + \frac{j}{N} + \delta_{C,j} \right]$$

$$\Phi_{D,j} = 2\pi \frac{n_D - 1}{\lambda_D} h_j = 2\pi \left[ k_{D,j} + \delta_{D,j} \right] \qquad (6), (7), (8)$$

$$\Phi_{B,j} = 2\pi \frac{n_B - 1}{\lambda_B} h_j = 2\pi \left[ k_{B,j} + \frac{N - j}{N} + \delta_{B,j} \right]$$

wherein $\delta_{C,j}$, $\delta_{D,j}$ and $\delta_{B,j}$ are phase errors for each step $j$ for CD, DVD, and BD, respectively, which are introduced into the first, second and third radiation beams. The phase error $\delta$ is a difference between an ideal amount and an actual amount of phase delay introduced into the radiation beams by a step $j$. A phase error $\delta$ of zero corresponds to introduction of the ideal amount of phase delay. This causes the radiation beam to be diffracted into a desired order at an ideal and maximum diffraction efficiency $\eta$. When the desired order is zero, the diffraction efficiency $\eta$ is 100%. For a non-zero diffraction order, the diffraction efficiency $\eta$ is defined by the relation $[sin(\pi m/N)/(\pi m/N)]^2$ wherein $m$ is a non-zero diffraction order. $k$ Is an integer indicating a multiple of the first, second and third wavelengths $\lambda_C$, $\lambda_D$, $\lambda_B$ for a step $j$ for one particular wavelength $\lambda_C$, $\lambda_D$, $\lambda_B$. Each step height $h_j$ corresponds to a multiple of both the integer $k$ and a unit height $h_u$ for the first, second and third wavelengths $\lambda_C$, $\lambda_D$, $\lambda_B$. The unit height $h_u$ may be calculated in accordance with relation 9:

$$h_u = \lambda_D / (n_D - 1) \qquad (9)$$

To determine the integer $k$ value for each step $j$, an ideal step height $h_j$ for each step $j$, required to introduce an ideal amount of phase delay, is calculated and divided by the appropriate wavelength $\lambda_C$, $\lambda_D$, $\lambda_B$. The integer k value nearest to the value of the calculated result is taken as the integer $k$ for step $j$ at a particular wavelength $\lambda_C$, $\lambda_D$, $\lambda_B$. Alternatively, the nearest integer value $k$ which is less than the calculated result may be taken.

Ideally, the phase error $\delta_C$, $\delta_D$, $\delta_B$, for CD, DVD and BD should be zero so that the diffraction efficiency $\eta_D$ for DVD is 100%. The diffraction efficiency $\eta_C$, $\eta_B$ for CD and BD is consequently defined by relations 10 and 11, respectively:

$$\eta_C = [sin(\pi/N)/(\pi/N)]^2 \qquad (10)$$

$$\eta_B = [sin(\pi/N)/(\pi/N)]^2 \qquad (11)$$

In a first approximation, a zero phase error, $\delta_{D,j} = 0$, is taken for the second wavelength $\lambda_D$ (DVD), so that relations 12 and 13 hold for each value of the integer $k_{D,j}$ for DVD:

$$k_{D,j} = \left[ k_{C,j} + \frac{j}{N} + \delta_{C,j} \right] \beta_C$$

$$k_{D,j} = \left[ k_{B,j} + \frac{N-j}{N} + \delta_{B,j} \right] \beta_B$$

$$(12), (13)$$

wherein $\beta_{C,j}$ and $\beta_{B,j}$ are each a ratio of phase steps for each step $j$ for the CD and the BD radiation beams. These phase step ratios depend on the ratio of the wavelengths $\lambda_C$, $\lambda_D$, $\lambda_B$ and on the dispersion parameter $\kappa$ and may be defined in accordance with relations 14 and 15:

$$\beta_C = \frac{\lambda_C}{\lambda_D} \frac{n_D - 1}{n_C - 1} = \frac{\lambda_C}{\lambda_D} \frac{\kappa + 1}{\kappa + \lambda_D^2 / \lambda_C^2}$$

$$\beta_B = \frac{\lambda_B}{\lambda_D} \frac{n_D - 1}{n_B - 1} = \frac{\lambda_B}{\lambda_D} \frac{\kappa + 1}{\kappa + \lambda_D^2 / \lambda_B^2}$$

$$(14), (15)$$

The integers $k_{C,j}$ and $k_{B,j}$ may be found so that the phase errors $\delta_{C,j}$, $\delta_{B,j}$ for CD and BD are as small as possible. A suitable error function, which indicates a total phase error of the diffraction structure 34, is the quantity E which is defined in accordance with relation 16:

$$E^2 = \sum_{j=1}^{N-1} \left( w \delta_{C,j}^2 + (1-w) \delta_{B,j}^2 \right)$$

$$(16)$$

wherein w is a relative weighting of CD/BD and is usually set to equal one half, such that w = ½. A value of w may be chosen, indicating that it is more important to minimize phase errors for CD rather than BD (a relatively large value of w), or wherein it is more important to minimize phase errors for BD rather than CD (a relatively small value of w). The integers $k_{D,j}$ for DVD with a minimum total phase error E yield a most preferred design. The diffraction efficiencies $\eta_C$, $\eta_B$ for CD and BD may be defined in accordance with relations 17 and 18:

$$\eta_C = \left[ \frac{\sin(\pi/N)}{(\pi/N)} \right]^2 \left| \frac{1}{N} \sum_{j=1}^{N} \exp(2\pi i \delta_{C,j}) \right|^2$$

$$\eta_B = \left[ \frac{\sin(\pi/N)}{(\pi/N)} \right]^2 \left| \frac{1}{N} \sum_{j=1}^{N} \exp(2\pi i \delta_{B,j}) \right|^2$$

$$(17), (18)$$

As described above, the calculations used for the design of the diffraction structure 34 for zero phase errors for the DVD beam, wherein $\delta_{D,j} = 0$, are used as a calculative input for a design for a diffraction structure 34 in which there are non-zero phase errors for the DVD beam, wherein $\delta_{D,j} \neq 0$. If there is a difference between the step heights $h_j$ of the design, wherein $\delta_{D,j} = 0$, and the design, wherein $\delta_{D,j} \neq 0$, the phase errors $\delta_{C,j}$, $\delta_{B,j}$ for CD and BD will change to different phase errors $\delta_{C,j}$, $\delta_{B,j}$ in accordance with relations 19 and 20:

$$\delta'_{C,j} = \delta_{C,j} + \frac{\delta_{D,j}}{\beta_C}$$

$$\delta'_{B,j} = \delta_{B,j} + \frac{\delta_{D,j}}{\beta_B}$$

(19), (20)

and the error function E will change to E' in accordance with relation 21:

$$E'^2 = \sum_{j=1}^{N-1} \left( w \delta'^2_{C,j} + (1-w) \delta'^2_{B,j} + \delta^2_{D,j} \right) \quad (21)$$

Minimization of the DVD phase errors $\delta_{D,j}$ is performed in accordance with relation 22:

$$\delta_{D,j} = -\frac{w \delta_{C,j}/\beta_C + (1-w)\delta_{B,j}/\beta_B}{1 + w/\beta_C^2 + (1-w)/\beta_B^2} \quad (22)$$

The diffraction efficiencies $\eta_C$, $\eta_D$. $\eta_B$ for CD, DVD and BD are given in accordance with relations 23, 24 and 25:

$$\eta_C = \left[ \frac{\sin(\pi/N)}{(\pi/N)} \right]^2 \left| \frac{1}{N} \sum_{j=1}^{N} \exp\left(2\pi i \delta'_{C,j}\right) \right|^2$$

$$\eta_D = \left| \frac{1}{N} \sum_{j=1}^{N} \exp\left(2\pi i \delta_{D,j}\right) \right|^2 \quad (23), (24), (25)$$

$$\eta_B = \left[ \frac{\sin(\pi/N)}{(\pi/N)} \right]^2 \left| \frac{1}{N} \sum_{j=1}^{N} \exp\left(2\pi i \delta'_{B,j}\right) \right|^2$$

Although DVD phase errors $\delta_{D,j}$ are non-zero, each diffraction efficiency $\eta_C$, $\eta_B$ for the CD and BD is thus considerably improved in comparison with cases in which the DVD phase errors $\delta_{D,j}$ are zero.
Specific embodiments of the invention will now be described, each embodiment being in accordance with the description given above. In preferred embodiments, the material of the diffraction structure 34 has an Abbe number of less than 40. In different preferred embodiments, the material has an Abbe number of less than 30 and in other preferred embodiments, the material has an Abbe number of less than 20.
Embodiments of the invention will now be described, in which each set 42 comprises at least four steps 38. In these embodiments, each set 42 consists of five steps 38, wherein N=5.

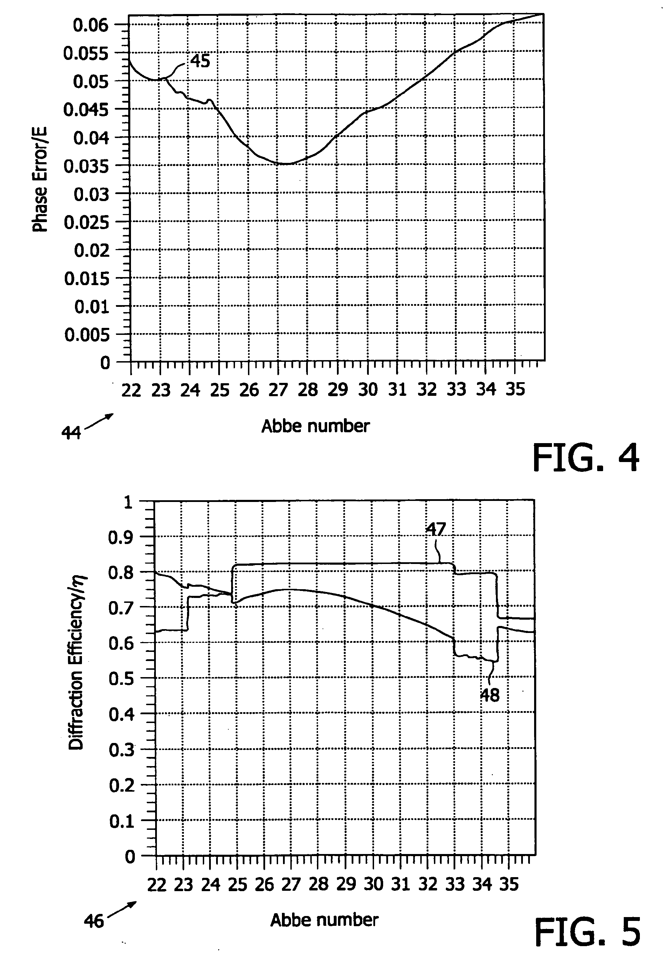

Figure 4 is a graph 44 which shows a relationship 45 between the total phase error E and the Abbe Number V wherein the diffraction structure 34 is designed, in which the DVD phase errors $\delta_{D,j}$ are zero. Figure 5 is a graph 46 which shows a relationship 47 for CD and a relationship 48 for BD between the diffraction efficiency $\eta$ and the Abbe Number V wherein the diffraction structure 34 is designed, in which the DVD phase errors $\delta_{D,j}$ are zero. The diffraction efficiency $\eta$ for DVD is 100%.
In a first embodiment, in which the DVD phase errors $\delta_{D,j}$ are zero, an optimum Abbe number V equals 27. The diffraction efficiencies are 81 % for CD and 74% for BD. The step heights $h_j$ for DVD are the integers $k_{D,1} = 5$, $k_{D,2} = 9$, $k_{D,3} = 2$, and $k_{D,4} = 7$. The corresponding CD and BD integers are $k_{C,1} = 4$, $k_{C,2} = 7$, $k_{C,3} = 1$ and $k_{C,4} = 5$, and $k_{B,1} = 8$, $k_{B,2} = 15$, $k_{B,3} = 3$ and $k_{B,4} = 12$. In an alternative embodiment, the step height $h_j$ of the first embodiment with the integer $k_{D,1} = 5$ may, alternatively, have the integer $k_{D,1} = 4$. Furthermore, the Abbe number V may, alternatively, have a value in the range of 24 to 30.

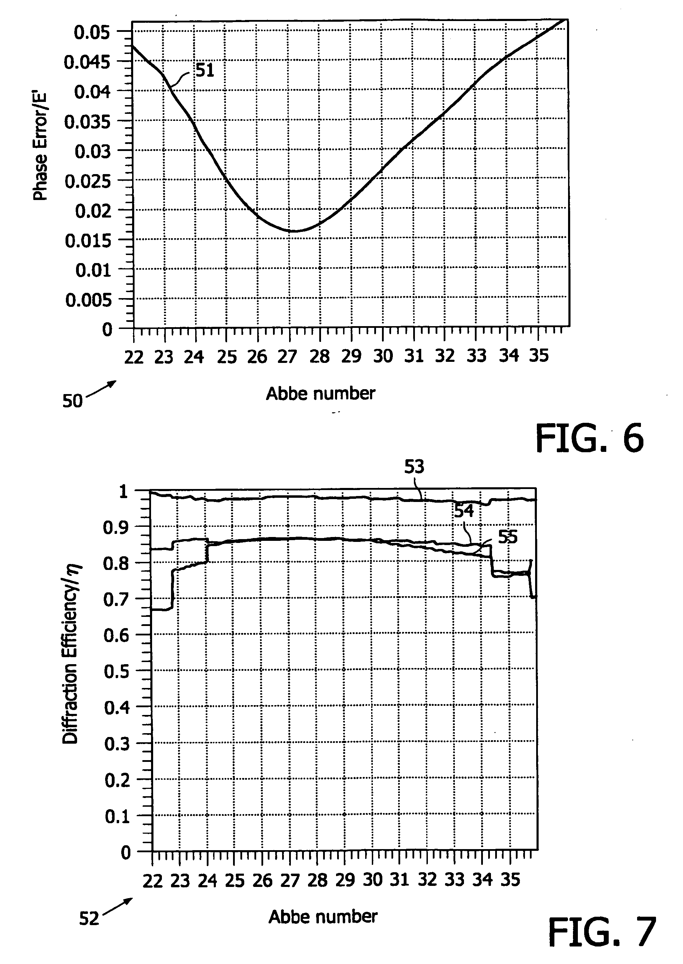

Figure 6 is a graph 50 which shows a relationship 51 between the total phase error $E'$ and the Abbe Number $V$ wherein the diffraction structure 34 is designed, in which the DVD phase errors $\delta_{D,j}$ are non-zero. Figure 7 is a graph 52 which shows a relationship 53 for CD, a relationship 54 for DVD and a relationship 55 for BD between the diffraction efficiency $\eta$ and the Abbe Number V wherein the diffraction structure 34 is designed, in which the DVD phase errors $\delta_{D,j}$ are non-zero. In the following embodiments, the DVD phase errors $\delta_{D,j}$ are non-zero.

In a second, preferred embodiment, the material has an Abbe number V in the range of 23 to 36, and more preferably an optimum Abbe number $V$ of 27. The step heights $h_j$ have the same integers k as those described above for the first embodiment. The diffraction efficiencies are 86% for CD, 97% for DVD and 86% for BD.

In a third embodiment, the range of Abbe numbers is 9.4 < V < 10.2, with an optimum at V = 10.0 and diffraction efficiencies for CD/BD weight w = 0.6 of 85% (CD), 97% (DVD), and 81% (BD). The optimum step heights $h_j$ are 4 for the integer $k_{D,1}$, 8 for $k_{D,2}$, 12 for $k_{D,3}$ and 11 for $k_{D,4}$ The corresponding CD and BD integers are $k_{C,1} = 3$, $k_{C,2} = 6$, $k_{C,3} = 9$ and $k_{C,4} = 8$ and $k_{B,1} = 18$, $k_{B,2} = 15$, $k_{B,3} = 3$ and $k_{B,4} = 12$.

In a fourth embodiment, the range of Abbe numbers is 10.2 < V < 10.6, with an optimum at V = 10.4 and diffraction efficiencies for CD/BD weight w = 0.6 of 85% (CD), 97% (DVD), and 81% (BD). The optimum step heights $h_j$ are 4 for the integer $k_{D,1}$, 8 for $k_{D,2}$, 7 for $k_{D,3}$, and 11 for $k_{D,4}$. The corresponding CD and BD integers are $k_{C,1} = 3$, $k_{C,2} = 6$, $k_{C,3} = 5$ and $k_{C,4} = 8$ and $k_{B,1} = 7$, $k_{B,2} = 15$, $k_{B,3} = 13$ and $k_{B,4} = 21$.

In a fifth embodiment, the range of Abbe numbers is 10.6 < V < 11.3, with an optimum at V = 10.8 and diffraction efficiencies for CD/BD weight w = 0.6 of 83% (CD), 96% (DVD), and 81% (BD). The optimum step heights $h_j$ are 4 for the integer $k_{D,1}$, 3 for $k_{D,2}$, 7 for $k_{D,3}$, and 12 for $k_{D,4}$. The corresponding CD and BD integers are $k_{C,1} = 3$, $k_{C,2} = 2$, $k_{C,3} = 5$ and $k_{C,4} = 9$ and $k_{B,1} = 7$, $k_{B,2} = 5$, $k_{B,3} = 13$ and $k_{B,4} = 23$.

In a sixth embodiment, the range of Abbe numbers is 11.3 < V < 11.8, with an optimum at V = 11.5 and diffraction efficiencies for CD/BD weight w = 0.6 of 83% (CD), 94% (DVD), and 72% (BD). The optimum step heights $h_j$ are 4 for the integer $k_{D,1}$, 3 for $k_{D,2}$, 7 for $k_{D,3}$, and 6 for $k_{D,4}$. The corresponding CD and BD integers are $k_{C,1} = 3$, $k_{C,2} = 2$, $k_{C,3}$ 5 and $k_{C,4} = 4$ and $k_{B,1} = 7$, $k_{B,2} = 5$, $k_{B,3} = 13$ and $k_{B,4} = 11$.

In a seventh embodiment, the range of Abbe numbers is 11.8 < V < 12.3, with an optimum at V = 12.1 and diffraction efficiencies for CD/BD weight w = 0.6 of 82% (CD), 91% (DVD), and 75% (BD). The optimum step heights $h_j$ are 10 for the integer $k_{D,1}$, 3 for $k_{D,2}$, 8 for $k_{D,3}$, and 6 for $k_{D,4}$. The corresponding CD and BD integers are $k_{C,1} = 8$, $k_{C,2} = 2$, $k_{C,3} = 6$ and $k_{C,4} = 4$ and $k_{B,1} = 18$, $k_{B,2} = 5$, $k_{B,3} = 15$ and $k_{B,4} = 11$.

In an eighth embodiment, the range of Abbe numbers is 12.3 < V < 13.4, with an optimum at V = 12.6 and distraction efficiencies for CD/BD weight w = 0.7 of 79% (CD), 96% (DVD), and 87% (BD). The optimum step heights $h_j$ are 10 for the integer $k_{D,1}$, 3 for $k_{D,2}$, 12 for $k_{D,3}$, and 6 for $k_{D,4}$. The corresponding CD and BD integers are $k_{C,1} = 8$, $k_{C,2} = 2$, $k_{C,3} = 9$ and $k_{C,4} = 4$ and $k_{B,1} = 18$, $k_{B,2} = 5$, $k_{B,3} = 22$ and $k_{B,4} = 11$.

In a ninth embodiment, the range of Abbe numbers is 20.3 < V < 21.2, with an optimum at V = 20.8 and diffraction efficiencies for CD/BD weight w = 0.6 of 82% (CD), 94% (DVD), and 68% (BD). The optimum step heights $h_j$ are 10 for the integer $k_{D,1}$, 3 for $k_{D,2}$, 2 for $k_{D,3}$, and 12 for $k_{D,4}$. The corresponding CD and BD integers are $k_{C,1} = 8$, $k_{C,2} = 2$, $k_{C,3} = 1$ and $k_{C,4} = 9$ and $k_{B,1} = 17$, $k_{B,2} = 5$, $k_{B,3} = 3$ and $k_{B,4} = 21$.

In a tenth embodiment, the range of Abbe numbers is 21.2 < V < 22.0, with an optimum at V = 21.5 and diffraction efficiencies for CD/BD weight w = 0.7 of 83% (CD), 96% (DVD), and 62% (BD). The optimum step heights $h_j$ are 10 for the integer $k_{D,1}$, 9 for $k_{D,2}$, 2 for $k_{D,3}$, and 12 for $k_{D,4}$. The corresponding CD and BD integers are $k_{C,1} = 8$, $k_{C,2} = 7$, $k_{C,3} = 1$ and $k_{C,4} = 9$ and $k_{B,1} = 17$, $k_{B,2} = 15$, $k_{B,3} = 3$ and $k_{B,4} = 21$.

In an eleventh embodiment, the range of Abbe numbers is 22.0 < V < 22.6, with an optimum at V = 22.4 and diffraction efficiencies for CD/BD weight w = 0.7 of 80% (CD), 97% (DVD), and 71 % (BD). The optimum step heights $h_j$ are 5 for the integer $k_{D,1}$, 9 for $k_{D,2}$, 2 for $k_{D,3}$, and 12 for $k_{D,4}$. The corresponding CD and BD integers are $k_{C,1} = 4$, $k_{C,2} = 7$, $k_{C,3} = 1$ and $k_{C,4} = 9$ and $k_{B,1} = 8$, $k_{B,2} = 15$, $k_{B,3} = 3$ and $k_{B,4} = 21$.

In a twelfth embodiment, the range of Abbe numbers is 34 < V < 38, with an optimum at V = 36 and diffraction efficiencies for CD/BD weight w = 0.6 of 77% (CD), 97% (DVD), and 72% (BD). The optimum step heights $h_j$ are 11 for the integer $k_{D,1}$, 9 for $k_{D,2}$, 2 for $k_{D,3}$, and 7 for $k_{D,4}$. The corresponding CD and BD integers are $k_{C,1} = 9$, $k_{C,2} = 7$, $k_{C,3} = 1$ and $k_{C,4} = 5$ and $k_{B,1} = 7$, $k_{B,2} = 15$, $k_{B,3} = 23$ and $k_{B,4} = 21$.

In a thirteenth embodiment, the range of Abbe numbers is 39 < V < 45, with an optimum at V = 42 and diffraction efficiencies for CD/BD weight w = 0.6 of 71% (CD), 94% (DVD), and 75% (BD). The optimum step heights $h_j$ are 11 for the integer $k_{D,1}$, 4 for $k_{D,2}$, 2 for $k_{D,3}$, and 12 for $k_{D,4}$. The corresponding CD and BD integers are $k_{C,1} = 9$, $k_{C,2} = 3$, $k_{C,3} = 1$ and $k_{C,4} = 9$ and $k_{B,1} = 18$, $k_{B,2} = 6$, $k_{B,3} = 3$ and $k_{B,4} = 20$.

In a fourteenth embodiment, the range of Abbe numbers is 46.6 < V < 47.6, with an optimum at V = 47.2 and diffraction efficiencies for CD/BD weight w = 0.7 of 71% (CD), 98% (DVD), and 76% (BD). The optimum step heights $h_j$ are 10 for the integer $k_{D,1}$, 4 for $k_{D,2}$, 2 for $k_{D,3}$, and 12 for $k_{D,4}$. The corresponding CD and BD integers are $k_{C,1} = 8$, $k_{C,2} = 3$, $k_{C,3} = 1$ and $k_{C,4} = 9$ and $k_{B,1} = 16$, $k_{B,2} = 6$, $k_{B,3} = 3$ and $k_{B,4} = 20$.

In a fifteenth embodiment, the range of Abbe numbers is 47.6 < V < 50 with an optimum at V = 49 and diffraction efficiencies for CD/BD weight w = 0.7 of 70% (CD), 98% (DVD), and 77% (BD). The optimum step heights $h_j$ are 10 for the integer $k_{D,1}$, 4 for $k_{D,2}$, 8 for $k_{D,3}$, and 12 for $k_{D,4}$. The corresponding CD and BD integers are $k_{C,1}$ = 8, $k_{C,2}$ = 3, $k_{C,3}$ = 6 and $k_{C,4}$ = 9 and $k_{B,1}$ = 16, $k_{B,2}$ = 6, $k_{B,3}$ = 13 and $k_{B,4}$ = 20.

Embodiments of the invention will now be described, in which each set 42 comprises at least four steps 38. In these embodiments, each set 42 consists of four steps 38, wherein $N$=4.

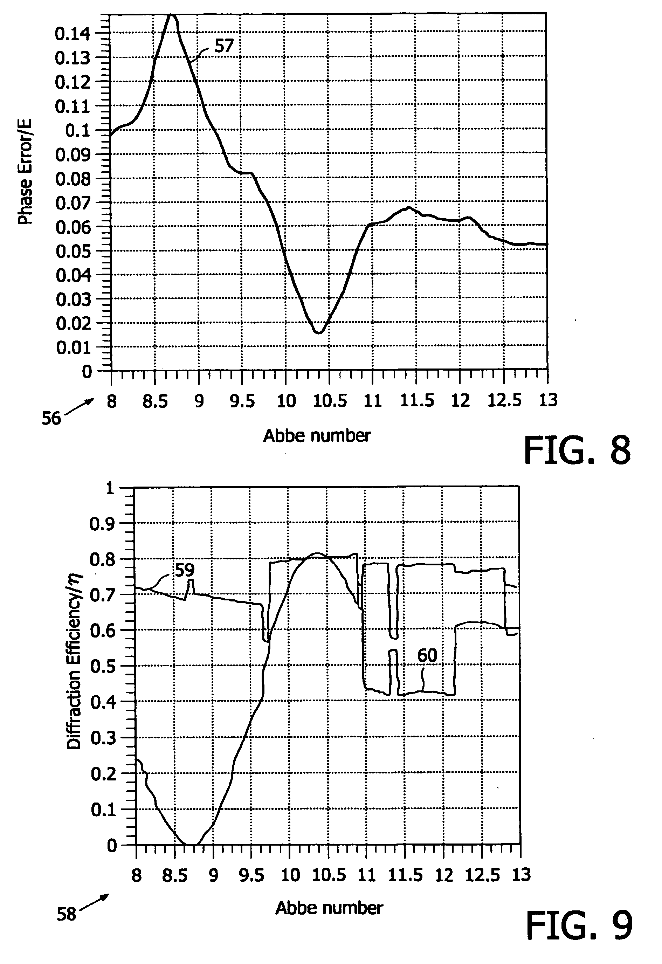

Figure 8 is a graph 56 which shows a relationship 57 between the total phase error $E$ and the Abbe Number $V$ wherein the diffraction structure 34 is designed, in which the DVD phase errors $\delta_{D,j}$ are zero. Figure 9 is a graph 58 which shows a relationship 59 for CD and a relationship 60 for BD between the diffraction efficiency $\eta$ and the Abbe Number $V$ wherein the diffraction structure 34 is designed, in which the DVD phase errors $\delta_{D,j}$ are zero. The diffraction efficiency $\eta$ for DVD is 100%.

In a sixteenth embodiment, the DVD phase errors $\delta_{D,j}$ are zero and an optimum Abbe number V is 10.4. The diffraction efficiencies are approximately 81 % for CD and for BD. The optimum step heights $h_j$ are 4 for the integer $k_{D,1}$, 8 for $k_{D,2}$, and 12 for $k_{D,3}$. The corresponding CD and BD integers are $k_{C,1}$ = 3, $k_{C,2}$ = 6 and $k_{C,3}$ = 9 and $k_{B,1}$ = 7, $k_{B,2}$ =15 and $k_{B,3}$ = 23. Alternatively, the Abbe number $V$ may have a value in the range of 10-11.

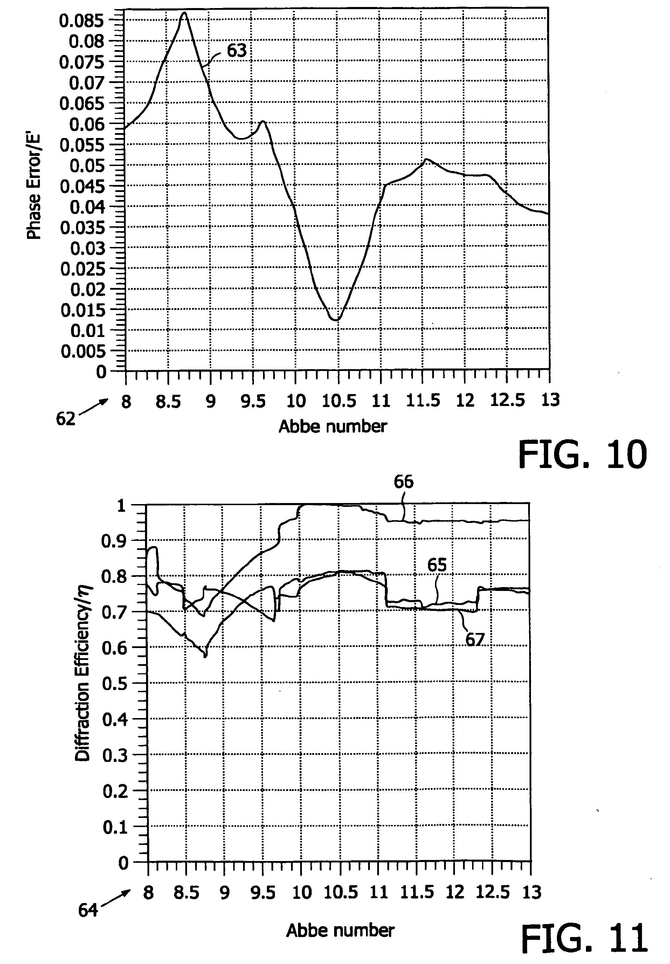

Figure 10 is a graph 62 which shows a relationship 63 between the total phase error $E'$ and the Abbe Number $V$ wherein the diffraction structure 34 is designed, in which the DVD phase errors $\delta_{D,j}$ are non-zero. Figure 11 is a graph 64 which shows a relationship 65 for CD, a relationship 66 for DVD and a relationship 67 for BD between the diffraction efficiency $\eta$ and the Abbe Number $V$ wherein the diffraction structure 34 is designed, in which the DVD phase errors $\delta_{D,j}$ are non-zero. In the following embodiments, the DVD phase errors $\delta_{D,j}$ are non-zero.

In a seventeenth embodiment, the material has an Abbe number in the range of 9.6 < V < 11.2. The step heights $h_j$ have the same integers $k_{D,j}$, $k_{C,j}$, and $k_{B,j}$ as those described for the sixteenth embodiment.

In an eighteenth embodiment, the range of Abbe numbers is 11.2 < V < 11.5, with an optimum at V = 11.3 and diffraction efficiencies for CD/BD weight w = 0.5 of 71% (CD), 95% (DVD), and 70% (BD). The optimum step heights $h_j$ are 4 for the integer $k_{D,1}$, 8 for $k_{D,2}$, and 7 for $k_{D,3}$. The corresponding CD and BD integers are $k_{C,1}$ = 3, $k_{C,2}$ = 6 and $k_{C,3}$ = 5 and $k_{B,1}$ = 7, $k_{B,2}$ = 15 and $k_{B,3}$ = 13.

In a nineteenth embodiment, the range of Abbe numbers is 11.5 < V < 12.4, with an optimum at V = 11.9 and diffraction efficiencies for CD/BD weight w = 0.5 of 72% (CD), 95% (DVD), and 70% (BD). The optimum step heights $h_j$ are 4 for the integer $k_{D,1}$, 3 for $k_{D,2}$, and 7 for $k_{D,3}$. The corresponding CD and BD integers are $k_{C,1}$ = 3, $k_{C,2}$ = 2 and $k_{C,3}$ = 5 and $k_{B,1}$ = 7, $k_{B,2}$ = 5 and $k_{B,3}$ = 13.

In a twentieth embodiment, the range of Abbe numbers is 12.4 < V < 13.2, with an optimum at V = 12.7 and diffraction efficiencies for CD/BD weight w = 0.7 of 76% (CD), 96% (DVD), and 72% (BD). The optimum step heights $h_j$ are 9 for the integer $k_{D,1}$, 3 for $k_{D,2}$, and 7 for $k_{D,3}$. The corresponding CD and BD integers are $k_{C,1}$ = 7, $k_{C,2}$ = 2 and $k_{C,3}$ = 5 and $k_{B,1}$ = 16, $k_{B,2}$ = 5 and $k_{B,3}$ = 13.

In a twenty-first embodiment, the range of Abbe numbers is 13.2 < V < 13.7, with an optimum at V = 13.5 and diffraction efficiencies for CD/BD weight w = 0.8 of 76% (CD), 99% (DVD), and 74% (BD). The optimum step heights $h_j$ are 9 for the integer $k_{D,1}$, 3 for $k_{D,2}$, and 12 for $k_{D,3}$. The corresponding CD and BD integers are $k_{C,1}$ = 7, $k_{C,2}$ = 2 and $k_{C,3}$ = 9 and $k_{B,1}$ = 16, $k_{B,2}$ = 5 and $k_{B,3}$ = 22.

In a twenty-second embodiment, the range of Abbe numbers is 19 < V < 21, with an optimum at V = 20 and diffraction efficiencies for CD/BD weight w = 0.5 of 76% (CD), 94% (DVD), and 76% (BD). The optimum step heights $h_j$ are 10 for the integer $k_{D,1}$, 3 for $k_{D,2}$, and 12 for $k_{D,3}$. The corresponding CD and BD integers are $k_{C,1}$ = 8, $k_{C,2}$ = 2 and $k_{C,3}$ = 9 and $k_{B,1}$ = 17, $k_{B,2}$ = 5 and $k_{B,3}$ = 21.

In a twenty-third embodiment, the range of Abbe numbers is 21 < V < 24, with an optimum at V = 22 and diffraction efficiencies for CD/BD weight w = 0.6 of 81 % (CD), 95% (DVD), and 71% (BD). The optimum step heights $h_j$ are 8 for the integer $k_{D,1}$, 2 for $k_{D,2}$ and 5 for $k_{D,3}$. The corresponding CD and BD integers are $k_{C,1}$ = 10, $k_{C,2}$ = 3 and $k_{C,3}$ = 7 and $k_{B,1}$ = 17, $k_{B,2}$ = 5 and $k_{B,3}$ = 12.

In a twenty-fourth embodiment, the range of Abbe numbers is 22.8 < V < 24.0, with an optimum at V = 23.6 and diffraction efficiencies for CD/BD weight w = 0.5 of 73% (CD), 96% (DVD), and 77% (BD). The optimum step heights $h_j$ are 10 for the integer $k_{D,1}$, 2 for $k_{D,2}$, and 7 for $k_{D,3}$. The corresponding CD and BD integers are $k_{C,1}$ = 8, $k_{C,2}$ = 1 and $k_{C,3}$ = 5 and $k_{B,1}$ = 17, $k_{B,2}$ = 3 and $k_{B,3}$ = 12.

In a twenty-fifth embodiment, the range of Abbe numbers is 26.6 < V < 29.8, with an optimum at V = 28.5 and diffraction efficiencies for CD/BD weight w = 0.6 of 72% (CD), 98% (DVD), and 72% (BD). The optimum step heights $h_j$ are 5 for the integer $k_{D,1}$, 9 for $k_{D,2}$, and 7 for $k_{D,3}$. The corresponding CD and BD integers are $k_{C,1}$ = 4, $k_{C,2}$ = 7 and $k_{C,3}$ = 5 and $k_{B,1}$ = 8, $k_{B,2}$ = 15 and $k_{B,3}$ = 12.

In a twenty-sixth embodiment, the range of Abbe numbers is 29.8 < V < 33.5, with an optimum at V = 32.0 and diffraction efficiencies for CD/BD weight w = 0.5 of 74% (CD), 95% (DVD), and 71 % (BD). The optimum step heights $h_j$ are 4 for the integer $k_{D,1}$, 9 for $k_{D,2}$, and 7 for $k_{D,3}$. The corresponding CD and BD integers are $k_{C,1}$ = 3, $k_{C,2}$ = 7 and $k_{C,3}$ = 5 and $k_{B,1}$ = 6, $k_{B,2}$ = 15 and $k_{B,3}$ = 12.

In a twenty-seventh embodiment, the range of Abbe numbers is 33.5 < V < 40.8, with an optimum at V = 35 and diffraction efficiencies for CD/BD weight w = 0.5 of 70% (CD), 97% (DVD), and 73% (BD). The optimum step heights $h_j$ are 4 for the integer $k_{D,1}$, 9 for $k_{D,2}$, and 2 for $k_{D,3}$. The corresponding CD and BD integers are $k_{C,1}$ = 3, $k_{C,2}$ = 7 and $k_{C,3}$ = 1 and $k_{B,1}$ = 6, $k_{B,2}$ = 15 and $k_{B,3}$ = 3.

The dispersion of materials is influenced by parameters other than solely the Abbe number. Consequently, a difference may arise between the actual performance and a predicted performance of the diffraction structure 34, in accordance with the calculations described hereinbefore.

If the material is polycarbonate (PC), the refractive indices for CD, DVD and BD are $n_C$ = 1.572545, $n_D$ = 1.578950, and $n_B$ = 1.620536, respectively. These values correspond to an Abbe number of approximately V = 30. In a preferred embodiment, PC is used as the material for the diffraction structure 34 described above in accordance with the second embodiment If the material is the mixture hexanediol diacrylate - trimethylol propane triacrylate (HDDA-TMPTA), which is a photo-polymer and is curable with ultraviolet radiation, the refractive indices for CD, DVD and BD are $n_C$ = 1.433053, $n_D$ = 1.451039 and $n_B$ = 1.502750, respectively. These values correspond to an Abbe number of approximately V = 12.9.

If the material is, for example, the mixture HDDA-CN965, which comprises hexanediol diacrylate (HDDA) and an aliphatic polyester-based urethane diacrylate oligomer, for example, CN965, and is a curable photo-polymer, the refractive indices for CD, DVD and BD are $n_C$ = 1.447672, $n_D$ = 1.467378, and $n_B$ = 1.504293, respectively. These values correspond to an Abbe number of approximately V = 19.9.

In a preferred embodiment, in which the material is, for example, HDDA-CN965, wherein the number of steps 38 in each set 42 is $N$=5 and the CD/BD weight is w = 0.6, the optimum step heights are 9 for the integer $k_{D,1}$, 3 for $k_{D,2}$, 2 for $k_{D,3}$, and 11 for $k_{D,4}$. The corresponding CD and BD integers are $k_{C,1}$ = 7, $k_{C,2}$ = 2, $k_{C,3}$ = 1 and $k_{C,4}$ = 8 and $k_{B,1}$ = 15, $k_{B,2}$ = 5, $k_{B,3}$ = 3 and $k_{B,4}$ = 19. The diffraction efficiencies are 84% for CD, 93% for DVD and 66% for BD.

In a preferred embodiment, in which the material is HDDA-CN965, wherein the number of steps 38 in each set 42 is $N$=4 and the CD/BD weight is w = 0.9, the optimum step heights are 9 for the integer $k_{D,1}$, 2 for $k_{D,2}$, and 11 for $k_{D,3}$. The corresponding CD and BD integers are $k_{C,1}$ = 7, $k_{C,2}$ = 1, and $k_{C,3}$ = 8 and $k_{B,1}$ = 15, $k_{B,2}$ = 3, and $k_{B,3}$ = 19. The diffraction efficiencies are 77% for CD, 98% for DVD and 77% for BD.

The above embodiments are to be understood as illustrative examples of the invention. Further embodiments of the invention are envisaged. For example, the number of steps in each set may be $N$ = 3, or more than $N$ = 5, for example, $N$ = 6. Furthermore, the Abbe number of the material, the sequence of step heights within each set, the step heights, the width of each step, the number of sets repeated across the surface of the diffraction structure, and a pattern of repeated sets across the surface may differ from those described above.

The diffraction structure may diffract the radiation beams in accordance with diffraction orders which differ from those described.

The compatibility plate may also include further optical structures for introducing further wavefront modifications into the radiation beams, such as a non-periodic phase structure or a lens.

The scanning device may scan optical record carrier formats which differ from those described, such as formats having a plurality of information layers. The device may also scan different formats which have a similar cover layer thickness, for example, High Density DVD (HD-DVD), and DVD, but in which radiation beams having different wavelengths are used to scan each format.

Different optical record carrier formats may be scanned by the device using radiation of different wavelengths and having a NA which differs from those described previously.

It is to be understood that any feature described in relation to any one embodiment may be used independently, or in combination with other features described, and may also be used in combination with one or more features of any other embodiment, or any combination of any other embodiment. Furthermore, equivalents and modifications not described above may also be employed without departing from the scope of the invention, which is defined in the appending claims.

## Claims

1. An optical scanning device (1) for scanning a first optical record carrier (3), a second, different, optical record carrier and a third, different, optical record carrier, each record carrier having an information layer (2') wherein the information layers of the first, second and third optical record carriers lie at a first information layer depth, a second, different, information layer depth and a third, different, information layer depth, respectively, wherein the scanning device includes:

   a) a radiation source system (7) arranged to produce first, second and third radiation beams for scanning said first, second and third record carriers with first, second and third wavelengths, respectively; and
   b) a diffraction structure (34) arranged to introduce a first, second and third wavefront modification into the first, second and third radiation beams, respectively,

wherein the diffraction structure includes a surface (36) having a plurality of steps (38), each step having a step height ($h_j$) which controls a form of the first, second and third wavefront modifications,

**characterized in that** the diffraction structure is formed from a material having an Abbe number of less than 50, whereby dispersion is provided between said first, second and third wavelengths, wherein in combination with the control provided by the step heights said dispersion is arranged to provide further control of the form of said first, second and third wavefront modifications so that a desired amount of spherical aberration is introduced into said first, second and third radiation beams appropriate to the information layer depths of said first, second and third optical record carriers, respectively.

2. An optical scanning device according to Claim 1, wherein said material has an Abbe number of less than 40.

3. An optical scanning device according to Claim 2, wherein said material has an Abbe number of less than 30.

4. An optical scanning device according to Claim 3, wherein said material has an Abbe number of less than 20.

5. An optical scanning device according to Claim 1, wherein said material has an Abbe number in the range of 23-36.

6. An optical scanning device according to any preceding Claim, wherein said steps are arranged in sets (42) of steps, each set having a sequence of step heights which is the same for each set.

7. An optical scanning device according to Claim 6, wherein said sets are arranged to repeat periodically across said surface.

8. An optical scanning device according to Claim 7, wherein said diffraction structure has an optical axis (OA) and said sets of steps are arranged to repeat periodically along a radius (r) extending from said optical axis.

9. An optical scanning device according to Claim 8, wherein each of said steps is annular and centered about said optical axis.

10. An optical scanning device according to any of Claims 6 to 9, wherein each set comprises at least four steps.

11. An optical scanning device according to Claim 10, wherein each set consists of four steps.

12. An optical scanning device according to Claim 10, wherein each set consists of five steps.

13. An optical scanning device according to any preceding claim, wherein said diffraction structure is arranged to diffract each of said first, second and third radiation beams according to a selected diffraction order.

14. An optical scanning device according to Claim 13, wherein said diffraction structure is arranged to diffract said first, second and third radiation beams according to a selected diffraction order of + 1, 0 and -1, respectively.

15. An optical scanning device according to any preceding Claim, wherein said first, second and third wavelengths are approximately 790, 660 and 405 nanometres, respectively.

**Patentansprüche**

1. Optische Abtasteinrichtung (1) zum Abtasten eines ersten optischen Aufzeichnungsträgers (3), eines zweiten, unterschiedlichen, optischen Aufzeichnungsträgers und eines dritten, unterschiedlichen, optischen Aufzeichnungsträgers, wobei jeder Aufzeichnungsträger eine Informationsschicht (2") aufweist, wobei die Informationsschichten des ersten, zweiten und dritten optischen Aufzeichnungsträgers in einer ersten Informationsschichttiefe, einer zweiten, unterschiedlichen Informationsschichttiefe bzw. einer dritten, unterschiedlichen Informationsschichttiefe liegen, wobei die Abtasteinrichtung Folgendes enthält:

a) ein Strahlungsquellensystem (7), das ausgebildet ist, erste, zweite und dritte Strahlungsbündel zum Abtasten des genannten ersten, zweiten und dritten Aufzeichnungsträgers mit einer ersten, zweiten bzw. dritten Wellenlänge zu erzeugen, und

b) eine Beugungsstruktur (34), die ausgebildet ist, eine erste, zweite und dritte Wellenfrontmodifikation in die ersten, zweiten bzw. dritten Strahlungsbündel einzubringen,

wobei die Beugungsstruktur eine Oberfläche (36) enthält, die eine Vielzahl von Stufen (38) aufweist, wobei jede Stufe eine Stufenhöhe ($h_j$) hat, die eine Form der ersten, zweiten und dritten Wellenfrontmodifikation steuert, **dadurch gekennzeichnet, dass** die Beugungsstruktur aus einem Material gebildet ist, das eine Abbe-Zahl von weniger als 50 hat, wodurch Dispersion zwischen der genannten ersten, zweiten und dritten Wellenlänge verschafft wird, wobei die genannte Dispersion in Kombination mit der durch die Stufenhöhen verschafften Steuerung ausgebildet ist, weitere Steuerung der Form der genannten ersten, zweiten und dritten Wellenfrontmodifikation zu verschaffen, so dass entsprechend den Informationsschichttiefen des ersten, zweiten bzw. dritten optischen Aufzeichnungsträgers eine gewünschte Menge sphärische Abberation in die genannten ersten, zweiten und dritten Strahlungsbündel eingebracht wird.

2. Optische Abtasteinrichtung nach Anspruch 1, bei der das genannte Material eine Abbe-Zahl von weniger als 40 hat.

3. Optische Abtasteinrichtung nach Anspruch 2, bei der das genannte Material eine Abbe-Zahl von weniger als 30 hat.

4. Optische Abtasteinrichtung nach Anspruch 3, bei der das genannte Material eine Abbe-Zahl von weniger als 20 hat.

5. Optische Abtasteinrichtung nach Anspruch 1, bei der das genannte Material eine Abbe-Zahl im Bereich 23 bis 36 liegt.

6. Optische Abtasteinrichtung nach einem der vorhergehenden Ansprüche, bei der die genannten Stufen in Sätzen (42) von Stufen angeordnet sind, wobei jeder Satz eine Sequenz von Stufenhöhen hat, die für jeden Satz die gleiche ist.

7. Optische Abtasteinrichtung nach Anspruch 6, bei der die genannten Sätze so angeordnet sind, dass sie sich über die genannte Oberfläche periodisch wiederholen.

8. Optische Abtasteinrichtung nach Anspruch 7, bei der die genannte Beugungsstruktur eine optische Achse (OA) hat und die genannten Sätze von Stufen so angeordnet sind, dass sie sich entlang einem von der genannten optischen Achse aus verlaufenden Radius ($r$) periodisch wiederholen.

9. Optische Abtasteinrichtung nach Anspruch 8, bei der jede der genannten Stufen ringförmig ist und um die genannte optische Achse zentriert ist.

10. Optische Abtasteinrichtung nach einem der Ansprüche 6 bis 9, bei der jeder Satz zumindest vier Stufen umfasst.

11. Optische Abtasteinrichtung nach Anspruch 10, bei der jeder Satz aus vier Stufen besteht.

12. Optische Abtasteinrichtung nach Anspruch 10, bei der jeder Satz aus fünf Stufen besteht.

13. Optische Abtasteinrichtung nach einem der vorhergehenden Ansprüche, bei der die genannte Beugungsstruktur ausgebildet ist, jedes der genannten ersten, zweiten und dritten Strahlungsbündel gemäß einer ausgewählten Beugungsordnung zu beugen.

14. Optische Abtasteinrichtung nach Anspruch 13, bei der die genannte Beugungsstruktur ausgebildet ist, die genannten ersten, zweiten und dritten Strahlungsbündel gemäß einer ausgewählten Beugungsordnung von +1, 0 bzw. -1 zu beugen.

15. Optische Abtasteinrichtung nach einem der vorhergehenden Ansprüche, bei der die genannte erste, zweite bzw. dritte Wellenlänge ungefähr 790, 660 bzw. 405 Nanometer beträgt.

**Revendications**

1. Dispositif de balayage optique (1) pour balayer un premier support d'enregistrement optique (3), un deuxième support d'enregistrement optique différent et un troisième support d'enregistrement optique différent, chaque support d'enregistrement ayant une couche d'information (2') dans laquelle les couches d'information des premier, deuxième et troisième supports d'enregistrement optiques se situent à une première profondeur de couche d'information, à une deuxième profondeur de couche d'information différente et à une troisième profondeur de couche d'information différente, respectivement, où le dispositif de balayage comprend:

a) un système de source de rayonnement (7) qui est agencé de manière à produire des premier, deuxième et troisième faisceaux de rayonnement pour balayer lesdits premier, deuxième et troisième supports d'enregistrement avec des première, deuxième et troisième longueurs d'onde, respectivement; et

b) une structure de diffraction (34) qui est agencée de manière à introduire une première, une deuxième et une troisième modification de front d'onde dans les premier, deuxième et troisième faisceaux de rayonnement, respectivement,

dans lequel la structure de diffraction comprend une surface (36) ayant une pluralité de gradins (38), chaque gradin ayant une hauteur à gradins ($h_j$) qui commande une forme des première, deuxième et troisième modifications de front d'onde,

**caractérisé en ce que** la structure de diffraction est formée à partir d'un matériau ayant un nombre d'Abbé qui est inférieur à 50, cas dans lequel il est prévu une dispersion entre lesdites première, deuxième et troisième longueurs d'onde où, en combinaison avec la commande qui est fournie par les hauteurs à gradins, ladite dispersion est agencée de manière à assurer une nouvelle autre commande de la forme desdites première, deuxième et troisième modifications de front d'onde, de sorte qu'une quantité souhaitée d'aberration sphérique est introduite dans lesdits premier, deuxième et troisième faisceaux de rayonnement qui sont appropriés aux profondeurs de couche d'information desdits premier, deuxième et troisième supports d'enregistrement optiques, respectivement.

2. Dispositif de balayage optique selon la revendication 1, dans lequel ledit matériau présente un nombre d'Abbé qui est inférieur à 40.

3. Dispositif de balayage optique selon la revendication 2, dans lequel ledit matériau présente un nombre d'Abbé qui est inférieur à 30.

4. Dispositif de balayage optique selon la revendication 3, dans lequel ledit matériau présente un nombre d'Abbé qui est inférieur à 20.

5. Dispositif de balayage optique selon la revendication 1, dans lequel ledit matériau présente un nombre d'Abbé dans la gamme comprise entre 23 et 36.

6. Dispositif de balayage optique selon l'une quelconque des revendications précédentes 1 à 5, dans lequel lesdits gradins sont agencés en des ensembles (42) de gradins, chaque ensemble ayant une séquence de hauteurs à gradins qui est identique pour chaque ensemble.

7. Dispositif de balayage optique selon la revendication 6, dans lequel lesdits ensembles sont agencés de manière à se répéter périodiquement à travers ladite surface.

8. Dispositif de balayage optique selon la revendication 7, dans lequel ladite structure de diffraction présente un axe optique (OA) et dans lequel lesdits ensembles de gradins sont agencés de manière à se répéter le long d'un rayon (r) s'étendant à partir dudit axe optique.

9. Dispositif de balayage optique selon la revendication 8, dans lequel chacun desdits gradins est annulaire et est centré autour dudit axe optique.

10. Dispositif de balayage optique selon l'une quelconque des revendications précédentes 6 à 9, dans lequel chaque ensemble comprend au moins quatre gradins.

11. Dispositif de balayage optique selon la revendication 10, dans lequel chaque ensemble est constitué de quatre gradins.

12. Dispositif de balayage optique selon la revendication 10, dans lequel chaque ensemble est constitué de cinq gradins.

13. Dispositif de balayage optique selon l'une quelconque des revendications précédentes 1 à 12, dans lequel ladite structure de diffraction est agencée de manière à diffracter chacun desdits premier, deuxième et troisième faisceaux de rayonnement selon un ordre sélectionné de diffraction.

14. Dispositif de balayage optique selon la revendication 13, dans lequel ladite structure de diffraction est agencée de manière à diffracter lesdits premier, deuxième et troisième faisceaux de rayonnement selon un ordre sélectionné de diffraction de +1, 0 et -1, respectivement.

15. Dispositif de balayage optique selon l'une quelconque des revendications précédentes 1 à 14, dans lequel lesdites première, deuxième et troisième longueurs d'onde sont de l'ordre de 790, de 660 et de 405 nanomètres, respectivement.

FIG. 1

EP 1 839 303 B1

# FIG. 2

# FIG. 3

FIG. 4

FIG. 5

FIG. 6

FIG. 7

FIG. 8

FIG. 9

FIG. 10

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1500956 A

**Non-patent literature cited in the description**

- **G. BOUWHUIS ; J. BRAAT ; A. HUIJSER et al.** *Principles of Optical Disc Systems,* 1985, ISBN 0-85274-785-3, 75-80

- **G. BOUWHUIS.** radial push-pull method. 70-73